# FASCICULE DE BREVET EUROPEEN

(11) **EP 0 962 353 B1**
(45) Date de publication et mention de la délivrance du brevet: **08.09.2010**
(21) Numéro de dépôt: 99401248.2
(22) Date de dépôt: 25.05.1999
(51) Int. Cl.: B60M 1/10

(54) **Système d'alimentaton par le sol pour véhicule électrique et véhicule équipé pour utiliser un tel système**
Boden-Stromzuführungssystem für ein Elektrofahrzeug und Fahrzeug dafür
Ground feeding system for electrical vehicle and associated vehicle

(30) Priorité: 04.06.1998 FR 9807012
(43) Date de publication de la demande: 08.12.1999
(73) Titulaire: Alstom Entreprise SA, 92300 Levallois Perret (FR)
(72) Inventeur: Cornic, Daniel, 78112 Fourqueux (FR)
(74) Mandataire: Blot, Philippe Robert Emile

(56) Documents cités:
- WO-A-93/10995

## Description

L'invention concerne un système d'alimentation, classiquement dit par le sol, pour véhicule électrique urbain équipé de frotteurs permettant un captage d'énergie lors du déplacement du véhicule au long d'un trajet matérialisé par une piste d'alimentation en énergie avec laquelle les frotteurs viennent en contact. Elle concerne plus particulièrement un système destiné à équiper des voies ou chaussées de circulation de véhicules ayant des pistes d'alimentation en énergie installées en partie supérieure de caniveaux prévus pour elles dans les chaussées, ainsi que les véhicules électriques susceptibles d'utiliser ce système.

L'alimentation de véhicules électriques en déplacement, qui captent l'énergie dont ils ont besoin auprès de moyens d'alimentation fixes avec lesquels ces véhicules restent électriquement en liaison, s'effectue le plus généralement par l'intermédiaire d'un réseau de lignes aériennes de contact s'étendant au long des trajets prévus pour les véhicules ou par l'intermédiaire de rails d'alimentation en énergie placés au sol, dans le cas de véhicules circulant en site propre.

L'installation de lignes aériennes impose une présence permanente et visuellement inévitable d'un réseau de fils et d'un ensemble de moyens de support pour ce réseau de fils au-dessus et au voisinage des chaussées de circulation des véhicules.

Ceci peut constituer un inconvénient considéré comme rédhibitoire dans le cadre de secteurs touristiques sauvegardés et par exemple dans des centres urbains classés.

Par contre, l'installation d'un réseau d'alimentation en énergie électrique par l'intermédiaire de pistes d'alimentation en énergie placées au sol remédie à cet inconvénient, lorsque les pistes d'alimentation et au moins une partie des moyens qui leur sont associées sont disposées dans des caniveaux, préférablement fermés qui sont réalisés dans les chaussées de circulation des véhicules.

Les systèmes d'alimentation par le sol sont connus depuis longtemps, ils présentent l'inconvénient d'exiger la réalisation de caniveaux pour le passage des pistes conductrices dans les chaussées de circulation. Il est alors nécessaire de couvrir ces caniveaux, lorsque les chaussées qui les comportent ne sont pas réservées aux seuls véhicules électriques et qu'il est nécessaire que des véhicules très divers et notamment à seulement deux roues puissent passer sur les caniveaux. De plus pour des raisons évidentes de sécurité, il est indispensable que tout soit fait pour que rien mis à part un frotteur de captage d'un véhicule électrique ne puisse être électriquement mis en contact avec une partie sous tension d'une piste conductrice d'un tel Système d'alimentation par le sol.

Le document EP-A- 0761493 décrit un système d'alimentation par le sol répondant à ces critères. Il prévoit la réalisation d'une piste conductrice composée d'une succession de plaques électriquement isolées les unes des autres qui recouvrent un caniveau au fond duquel s'étend un ruban élastiquement déformable contenant un matériau ferromagnétique dont les deux faces sont recouvertes d'un matériau conducteur. La face supérieure du ruban est reliée à une ligne d'alimentation. Le ruban peut être magnétiquement attiré par des aimants portés par un véhicule électrique de manière à venir en contact par sa face supérieure avec au moins une plaque de la piste conductrice contre laquelle se déplace un frotteur de captage du véhicule. Les autres plaques de la piste conductrice, sur lesquelles le ruban repose, sont reliées à un très faible potentiel par la face inférieure du ruban qui sert de liaison de retour d'alimentation.

Un système similaire est connu de WO 93/10995.

L'invention propose un système d'alimentation par le sol, de constitution modulaire, pour véhicule électrique, guidé ou non, présentant une grande simplicité de fonctionnement, ayant un temps de réponse minimal et permettant d'obtenir une sécurité et une fiabilité accrues.

Ce système d'alimentation par le sol est prévu pour être associé à des véhicules électriques qui sont équipés de frotteurs de captage d'énergie alignés selon un axe longitudinal, préférablement médian, du véhicule, il comporte une succession de segments conducteurs, électriquement isolés l'un de l'autre, qui forment une piste conductrice pour les frotteurs de captage et qui sont disposés de manière à recouvrir un caniveau ménagé dans une chaussée de roulement de véhicules au niveau de laquelle les segments viennent affleurer. Des moyens de commutation individuels, de type statique, pour chaque segment assurent une continuité électrique du segment auquel ils sont affectés avec une liaison de retour d'alimentation commune, tant qu'un signal de commande de connexion du segment à une liaison d'alimentation commune n'a pas été reçu pour eux d'un véhicule.

Selon l'invention, les moyens de commutation individuels propres à un segment sont disposés sous lui dans le caniveau où circulent les liaisons d'alimentation et de retour d'alimentation communes aux segments, ces moyens de commutation propres à chaque segment sont commandés par des moyens individuels de prise en compte de signal de commande de connexion, codé, qui sont sélectivement interconnectés avec ceux des segments immédiatement voisins qui entourent ce segment dans la succession de segments formant une piste conductrice, ou à défaut avec le segment voisin qui seul existe en cas d'un segment situé à une extrémité de piste, de manière qu'un signal codé de commande de connexion qui est'sélectivement reçu d'un véhicule par un segment entraîne la connexion, à la liaison d'alimentation, de ce segment et de ceux, ou à défaut de celui, des segments qui sont immédiatement voisins.

Selon l'invention, chaque segment est doté de moyens individuels pour prendre en compte un signal codé de commande de connexion transmis par conduction électrique à partir d'un véhicule par l'intermédiaire d'un frotteur d'alimentation de ce véhicule alors en contact avec lui.

L'invention concerne aussi les véhicules roulants équipés pour exploiter le système d'alimentation évoqué ci-dessus.

Selon une caractéristique de l'invention un tel véhicule comporte des moyens pour transmettre un signal de commande de connexion de segment qui produisent un signal codé, de type numérique, vers un segment de piste avec lequel ce véhicule est en liaison électrique par l'intermédiaire d'un frotteur d'alimentation.

L'invention, ses caractéristiques et ses avantages sont précisés dans la description qui suit en liaison avec les figures évoquées ci-dessous.

La figure 1 présente un double exemple d'implantation de systèmes d'alimentation par le sol selon l'invention.

La figure 2 présente une vue en coupe transversale d'une chaussée dotée d'un caniveau équipé d'un système d'alimentation par le sol selon l'invention.

La figure 3 présente un schéma synoptique d'un système d'alimentation selon l'invention et d'un véhicule électrique prévu pour un tel système.

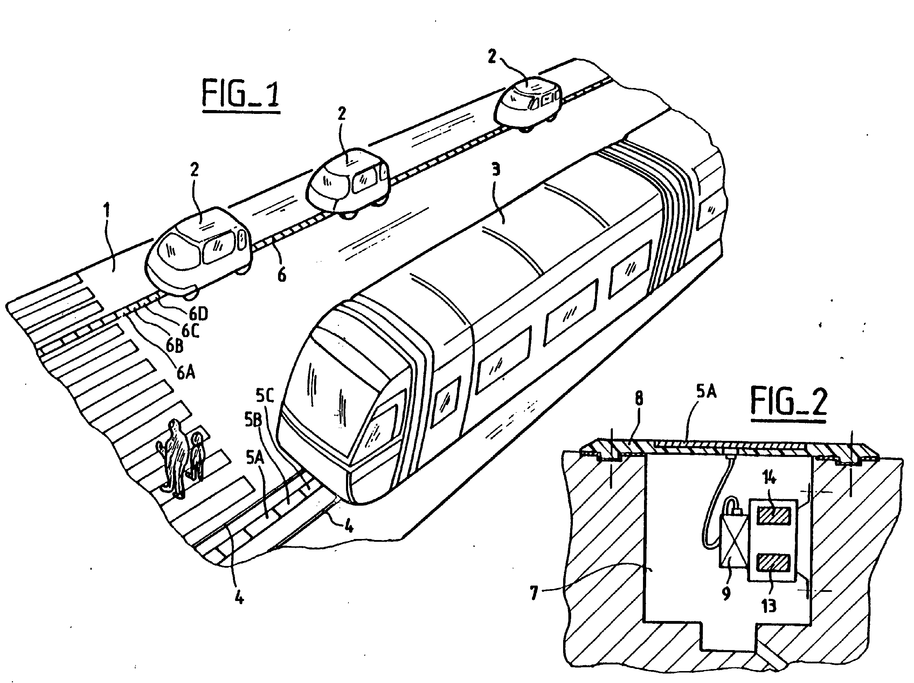

Le dessin de la figure 1 représente une chaussée de roulement 1 permettant une circulation de véhicules et de piétons, les véhicules pouvant être de types très divers et étant symbolisés ici par des voitures individuelles 2 dont au moins certaines sont supposées être des véhicules électriques ou mixtes, ainsi que par un matériel roulant de transport en commun 3 électrique ou mixte, ici supposé être un tramway circulant sur des rails 4.

Il est prévu que des véhicules électriques, ou mixtes et alors supposés dotés d'un moteur électrique associé à un moteur à combustion interne, puissent être électriquement alimentés par le sol par l'intermédiaire de frotteurs destinés à rester en contact avec une piste conductrice présente au niveau d'une voie et notamment d'une voie d'une chaussée sur laquelle ces véhicules et éventuellement d'autres véhicules peuvent circuler.

Deux pistes conductrices 5 et 6 destinées à alimenter des véhicules différents sont représentées sur la figure 1. La piste conductrice 5 est plus particulièrement destinée à alimenter du matériel roulant de transport en commun et par exemple des tramways à roues métalliques roulant sur des rails comme représenté, des tramways équipés de roues à pneu roulant directement sur la chaussée ou encore des trolleybus alors équipés de frotteurs de captage en bas de caisse, comme les autres véhicules envisagés ici.

La piste conductrice 5 est ici supposée destinée à fournir une alimentation sous haute tension aux véhicules, ainsi qu'éventuellement un retour d'alimentation. Ce retour peut aussi être assuré par les rails dans le cas de véhicules roulant sur des rails électriquement conducteurs. La tension d'alimentation est par exemple une tension continue, ou encore une tension alternative monophasée correspondant à l'une des phases d'une alimentation triphasée.

La piste conductrice 6 est plus particulièrement destinée à alimenter des véhicules individuels électriques ou mixtes dotés de frotteurs de captage comprenant au moins un frotteur d'alimentation et un frotteur de retour. Elle peut éventuellement être exploitée par des véhicules ne comportant qu'un ou plusieurs frotteurs d'alimentation, le courant de retour circulant alors par d'autres moyens. Les véhicules mixtes sont supposés équipés de moyens leur permettant de se mouvoir dans la circulation soit en s'alimentant à partir d'une piste conductrice qu'ils suivent en cours de déplacement, soit indépendamment en utilisant un autre source d'énergie et par exemple à partir de batteries d'accumulateur qu'ils emportent.

Les pistes conductrices 5 et 6 sont susceptibles d'être réalisées de manière semblable, elles sont différentes dans la mesure où les caractéristiques, notamment de taille et de puissance, des véhicules pour lesquelles elles sont prévues, sont différentes.

Dans tous les cas, chaque piste conductrice destinée à coopérer avec des frotteurs de captage de véhicule est constituée d'une succession de segments conducteurs, 5A, 5B, 5C,... ou 6A, 6B, 6C, 6D,... pratiquement jointifs quoiqu'étant électriquement isolés l'un de l'autre par un matériau isolant approprié d'épaisseur minimale déterminée qui est notamment fonction de la tension d'alimentation fournie aux véhicules.

Chaque segment a une longueur qui est dépendante de la longueur des véhicules à alimenter. La largeur des segments est choisie suffisante pour pouvoir assurer un contact sur toute la largeur d'un frotteur en tenant compte des mouvements latéraux éventuels du frotteur, lorsque celui-ci parcoure un segment dans le sens de sa longueur,. Dans un exemple de réalisation, la longueur d'un segment est de l'ordre d'un à deux mètres, alors que sa largeur est de l'ordre de trente centimètres.

Les segments successifs répartis sur la longueur d'une piste sont disposés de manière à recouvrir un caniveau 7 ménagé sur au moins une partie de la longueur d'une chaussée qui peut éventuellement être empruntée par des piétons et sur laquelle sont susceptibles de rouler des véhicules potentiellement très différents allant du véhicule léger de type deux roués aux véhicules lourds de transport. Dans une forme préférée de réalisation, un caniveau de système d'alimentation selon l'invention et la succession de segments formant la piste conductrice qui le recouvre sont disposés au centre d'une voie de circulation sur la chaussée dans laquelle ce caniveau est ménagé, de manière que les frotteurs des véhicules puissent être alignés selon un axe longitudinal, préférablement médian du véhicule qui les comporte. Ceci permet en effet de mettre plus facilement hors d'atteinte les frotteurs d'un véhicule et les segments de piste qui sont sous tension lors du passage d'un véhicule alimenté par une piste.

Dans l'exemple de réalisation illustré sur la figure 2, le segment 5A, représenté coupé transversalement, est supposé positionné dans un châssis 8 en matériau isolant susceptible de supporter de fortes charges, de même que le segment, lors d'un passage d'un véhicule. Chaque segment est réalisé en matériau électriquement conducteur de forte rigidité et il vient se monter dans le châssis 8 où il se positionne de manière à fermer une section de caniveau 7, au-dessus de laquelle ce châssis est immobilisé. Le caniveau est alors fermé de manière étanche par l'ensemble formé par l'alignement de châssis 8 prévus pour les segments et par les segments positionnés dans ces châssis. Ces châssis et les segments sont ici prévus pour venir affleurer au niveau de la chaussée 1, ils peuvent éventuellement être légèrement en saillie comme montré sur la figure 2, si la piste est ménagée dans une voie de circulation en site propre qui est donc réservée à un type de véhicule déterminé et par exemple à un tramway sur rail.

Chaque segment de piste conductrice est préférablement associé à une structure modulaire qui lui est propre et dans laquelle il est associé au châssis qui le porte et à des moyens décrits plus loin qui lui sont également propres, ceci favorisant le remplacement des éléments usés ou défectueux.

Dans une forme préférée de réalisation, chaque module propre à un segment de piste conductrice comporte un boîtier individuel 9 dans lequel sont logés les moyens permettant de commander l'alimentation du segment et accessoirement d'agir sur les moyens correspondants des segments immédiatement voisins de ce segment. Ce boîtier individuel 9 vient se loger sous un segment dans la section de caniveau que recouvre ce segment.

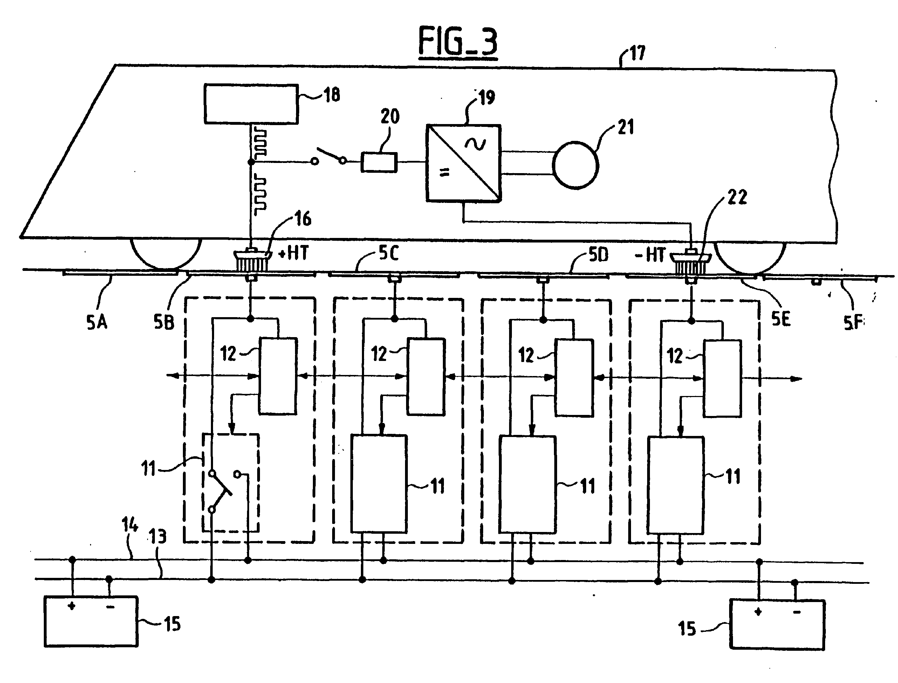

Les moyens de commande de l'alimentation d'un segment comporte essentiellement des moyens de commutation individuels 11, de type statique, et des moyens individuels 12 de prise en compte du signal de commande de connexion transmis depuis un véhicule, - voir figure 3 -.

Les moyens de commutation individuels 11 d'un segment qui sont ici schématisés par un contact repos de type inverseur, sont constitués par un classique circuit électronique de puissance qui assure une mise en liaison du segment avec une liaison de retour d'alimentation 13 portée à un potentiel théoriquement nul et pratiquement suffisamment faible pour être sans danger, tant qu'un signal de commande de connexion du segment à une liaison d'alimentation 14 n'est par reçu d'un véhicule.

Les moyens de commutation individuels de chaque segment d'une piste conductrice sont reliés d'une part à une liaison d'alimentation 14 et d'autre part à une liaison de retour d'alimentation 13 qui sont communes aux segments de la piste considérée, comme montré sur la figure 3. Ces liaisons sont ici supposées circuler dans le caniveau 7 où se logent les boîtiers contenant les moyens de commutation 11, comme montré sur la figure 2. Elles sont par exemple constituées par des barres de cuivre ou d'aluminium noyées dans une résine isolante étanche et elles sont classiquement reliées à des moyens d'alimentation 15 servant de source. Ces derniers sont éventuellement relayés, étant par exemple supposés dupliqués aux extrémités des liaisons sur la figure 3 et ils sont classiquement réalisés sous le forme de sous-stations, celles-ci étant équipées de dispositifs de protection usuels en ce domaine. La liaison d'alimentation 14 est destinée à fournir le courant d'alimentation, ici supposé continu, nécessaire aux moteurs des véhicules aptes à être alimentés par l'intermédiaire du système selon l'invention, au travers de leurs frotteurs respectifs et des segments de piste sur lesquels ces frotteurs viennent en cours de déplacement. La tension primaire entre liaisons 13 et 14 est par exemple une tension continue de l'ordre de 350 ou 750 volts, dans le cas de véhicules de transport en commun, ce peut aussi être une tension alternative monophasée de par exemple 400 volts.

Selon l'invention, tous les segments d'une piste, telle que par exemple la piste 5, sont normalement en liaison avec la liaison de retour d'alimentation 13 par l'intermédiaire des moyens de commutation 11 individuels qui les desservent respectivement. Seuls sont mis sous tension ceux de ces segments qui ont leurs moyens de commutation temporairement commandés par un signal de commande émanant d'un véhicule de manière à assurer une mise sous tension par connexion temporaire à la liaison d'alimentation 14.

Pour réaliser ceci, des moyens individuels 12 de prise en compte sont associés à chaque segment pour capter les signaux de commande de connexion parvenant des véhicules. Ces moyens sont ici supposés logés avec les moyens de commutation 11 propres à chaque segment dans les boîtiers 9 individuellement associés aux segments.

Ces moyens de prise en compte 12 captent le signal de commande de connexion transmis par un véhicule au segment auquel ils sont affectés. Ils produisent alors une commande de connexion à destination des moyens de commutation propres à ce segment. Dans une forme préférée de réalisation, une commande de connexion n'est appliquée aux moyens de commutation propres à un segment que tant qu'un signal de commande de connexion fourni par un véhicule est reçu pour le segment considéré.

Dans la réalisation proposée, la connexion d'un segment d'une piste est réalisée lorsque le signal de commande de connexion fourni par un véhicule est reçu soit directement par le segment considéré, soit par l'un ou l'autre des deux segments immédiatement voisins, soit le, cas échéant, par le seul segment immédiatement voisin dans le cas d'un segment situé à une extrémité d'une piste.

Le signal de commande de connexion fourni par un véhicule, tel que par exemple le véhicule 17, est supposé produit par un circuit émetteur 18. Ce circuit émetteur est par exemple relié au frotteur d'alimentation 16, via une interface de transmission non représentée, de manière à transmettre une commande de connexion par conduction électrique sous la forme d'un signal numérique codé. Un signal codé sous forme d'un signal fréquentiel à courant porteur est également envisagé. Ces signaux codés sont exploités pour transmettre des informations spécifiques à but sécuritaire et par exemple un message de sécurisation à reconnaissance cyclique,et/ou une ou des indications relatives au véhicule, telle que par exemple une indication de type. Le frotteur d'alimentation 16 est celui par lequel le véhicule est relié au potentiel d'alimentation positif, via la liaison d'alimentation 14 dans le cas d'une alimentation en courant continu.

Dans la réalisation proposée, le signal de commande est permanent, lorsque le véhicule est à alimenter. Il est supposé transmis par le circuit émetteur d'un véhicule vers les moyens de prise en compte 12 associés à un segment, au travers du frotteur d'alimentation 16 de ce véhicule qui est alors en contact avec ce segment, par exemple vers les moyens de prise en compte 12 prévus pour le segment 5B en contact avec le frotteur d'alimentation 16 sur la figure 3.

En variante, le signal numérique codé, correspondant à une commande de connexion produite par un circuit émetteur 18 d'un véhicule dont le frotteur d'alimentation 16 est en contact avec un segment, est un signal hyperfréquence envoyé par une antenne en direction du segment. Les moyens de prise en compte 12 affectés aux divers segments sont alors munis de récepteurs de signaux appropriés.

Selon une forme préférée de l'invention, les moyens de prise en compte propres à un segment sont interconnectés avec ceux des segments immédiatement voisins, ou éventuellement au seul segment immédiatement voisin dans le cas d'un segment situé à une des extrémités d'une piste. Ces interconnexions sont destinées à assurer que le ou les deux voisins immédiats d'un segment déterminé soient connectés à la liaison d'alimentation 14 par leurs moyens de commutation respectifs, lorsque les moyens de prise en compte de ce segment déterminé reçoivent un signal de commande de connexion par l'intermédiaire du segment auquel ils sont affectés.

Les moyens de prise en compte propres à chaque segment comportent par exemple une logique électronique associative, non représentée, permettant de contrôler la connexion du segment à la liaison d'alimentation 14 par action sur les moyens de commutation 11 propres à ce segment. Pour permettre la mise en oeuvre du processus évoqué plus haut, une commande de connexion à destination des moyens de commutation propres à un segment peut être produite soit par les moyens de prise en compte relatifs à ce segment, soit par ceux d'un des segments qui l'entoure. Le maintien de la connexion d'un segment à la liaison d'alimentation est assuré tant qu'un signal de commande de connexion est reçu, soit par ce segment, soit par l'un ou l'autre des segments immédiatement voisins.

Dans l'exemple présenté le courant d'alimentation, supposé continu et fourni par le sol à un véhicule, est appliqué à un convertisseur continu/alternatif 19 via un organe de commande de marche 20, ce convertisseur permettant d'utiliser un moteur 21 à courant alternatif comme cela est connu en la matière.

Le retour du courant d'alimentation transmis par l'intermédiaire d'un frotteur d'alimentation peut éventuellement s'effectuer par un rail sur lequel roule le véhicule 17, lorsque ce dernier est doté de roues électriquement conductrices. Il peut aussi être assuré par un rail de guidage de véhicule si ce rail est électriquement relié à la liaison de retour 13 desservant la piste conductrice à laquelle ce rail est associé.

Dans une autre forme de réalisation exploitable avec tous les véhicules équipés d'au moins deux frotteurs de captage, dont l'un d'alimentation et un autre de retour ayant donc des polarité différentes, il est prévu que ces frotteurs soient alignés selon un axe longitudinal du véhicule qui les porte, cet axe étant préférablement choisi médian pour des raisons de sécurité. Il est alors prévu un pas entre frotteurs de polarité différente qui soit fonction de la longueur des segments et plus particulièrement un pas supérieur à la somme des longueurs de trois segments dans le cas du système décrit ci-dessus.

Comme déjà indiqué, le frotteur d'alimentation 16 commande alors la connexion à la liaison d'alimentation 14 du segment avec lequel il est en contact, si ce dernier n'a pas encore été connecté sous l'action des moyens de prise en compte d'un segment immédiatement voisin. Le retour d'alimentation peut alors être assuré par un frotteur de retour qui est resté relié à la liaison de retour d'alimentation 13, tel le frotteur 22 ici en contact avec un segment 5E, dans la mesure où ni ce segment, ni ses voisins immédiats, n'ont reçu de signal de commande de connexion en provenance du véhicule 17.

Il doit bien être entendu qu'une pluralité de frotteurs d'alimentation 16 peuvent être répartis sur la longueur d'un matériel roulant, si cela s'avère nécessaire. Il en sera alors de même s'il est prévu des frotteurs de retour 22 pour un retour de courant par l'intermédiaire de segments de la même piste. La commande de connexion peut être produite soit simultanément pour tous les frotteurs, soit individuellement pour chacun d'eux suivant des techniques qui ne sont pas décrites ici dans la mesure où elles ne font pas l'objet de la présente invention. Il est aussi prévu de mettre en service les frotteurs d'un véhicule par abaissement sur les segments et de les mettre hors service par relèvement.

Par ailleurs le système selon l'invention peut être associé avec un autre système et par exemple un système d'alimentation de véhicules par lignes aériennes de contact. Chaque système est alors prévu pour fournir une alimentation à des véhicules sur une partie différente d'un trajet déterminé, ces véhicules étant bien entendu prévus pour fonctionner indifféremment avec l'un ou l'autre des systèmes.

## Revendications

1. Système d'alimentation par le sol pour véhicule électrique (2, 3, 17) équipé d'un ou de plusieurs frotteurs de captage d'énergie (16, 22) disposé(s) selon un axe longitudinal, préférablement médian, du véhicule, comportant une succession de segments conducteurs (5A, 5B, SC), électriquement isolés l'un de l'autre, qui forment une piste conductrice pour les frotteurs et qui sont disposés de manière à recouvrir un caniveau (7) ménagé dans une chaussée (1) de roulement de véhicules au niveau de laquelle les segments viennent affleurer, ainsi que des moyens de commutation individuels (11), de type statique, pour chaque segment, ces moyens de commutation individuels assurant une continuité électrique du segment auquel ils sont affectés avec une liaison de retour d'alimentation (14), tant qu'un signal de commande de connexion de segment à une liaison d'alimentation n'a pas été reçu pour eux d'un véhicule, les moyens de commutation individuels étant propres à un segment disposés sous lui dans le caniveau où circulent les liaisons d'alimentation (14) et de retour d'alimentation (13) communes aux segments, ces moyens de commutation (11) propres à chaque segment étant commandés par des moyens individuels (12) de prise en compte de signal de commande de connexion, qui sont sélectivement interconnectés avec ceux des segments immédiatement voisins dans la succession de segments formant une piste conductrice, ou à défaut avec le segment voisin qui seul existe en cas d'un segment situé à une extrémité de piste, de manière qu'un signal de commande de connexion qui est sélectivement reçu d'un véhicule par un segment entratne la connexion, à la liaison d'alimentation, de ce segment et de ceux, ou à défaut de celui, des segments qui sont immédiatement voisins,
**caractérisé en ce que** le signal de commande est codé, et **en ce que** chaque segment est doté de moyens individuels (12) pour prendre en compte le signal codé de commande de connexion transmis par conduction électrique à partir d'un véhicule par l'intermédiaire d'un frotteur d'alimentation (16) de ce véhicule alors en contact avec lui.

2. Véhicule électrique roulant équipé pour utiliser un système d'alimentation selon la revendication 1, **caractérisé en ce qu'**il comporte des moyens (18) pour transmettre un signal de commande de connexion de segment produisant un signal de commande codé qui est transmis vers un segment de piste avec lequel ce véhicule est en liaison électrique par l'intermédiaire d'un frotteur d'alimentation (16)

3. Véhicule électrique selon la revendication 2, **caractérisé en ce qu'**il comporte des moyens (18), pour transmettre un signal électrique: codé de commande de connexion de segment par l'intermédiaire d'un frotteur d'alimentation (16) du véhicule.

4. Véhicule électrique selon la revendication 2, **caractérisé en ce qu'**il comporte des moyens (18), pour transmettre un signal de commande de connexion de segment, produisant un signal hyperfréquence codé transmis par une antenne portée par ce véhicule au segment avec lequel un frotteur d'alimentation (16) est en contact.

## Claims

1. Ground-based electrical power supply system for an electrical vehicle (2, 3, 17) provided with one or more energy capture sliding contacts (16, 22) which is/are arranged along a longitudinal axis, preferably a centre axis, of the vehicle, comprising a series of conductive segments (5A, 5B, 5C) which are electrically isolated from each other and which form a strip conductor for the sliding contacts and which are arranged so as to cover a channel (7) which is provided in a vehicle carriageway (1), in the region of which the segments are flush, and individual commutation means (11), of the static type, for each segment, these individual commutation means providing electrical continuity for the segment with which they are associated with an electrical power supply return connection (14), as long as a control signal for connection of the segment to an electrical power supply connection has not been received for them from a vehicle, the individual commutation means being specific to a segment which is arranged therebelow in the channel in which there extend the electrical power supply connections (14) and electrical power supply return connections (13) which are common to the segments, these commutation means (11) specific to each segment being controlled by individual means (12) which are for taking into account the connection signal and which are selectively interconnected with those of the immediately adjacent segments in the series of segments which form a strip conductor, or otherwise with the adjacent segment which exists only in the case of a segment which is located at a strip end, so that a connection control signal which is selectively received from a vehicle by a segment brings about the connection, to the electrical power supply connection, of that segment and that/those segment(s) which is/are immediately adjacent,
**characterised in that** the control signal is encoded, and **in that** each segment is provided with individual means (12) for taking into account the encoded connection control signal transmitted by means of electrical conduction from a vehicle via a sliding electrical power supply contact (16) of this vehicle in contact therewith.

2. Moving electrical vehicle which is equipped to use an electrical power supply system according to claim 1, **characterised in that** it comprises means (18) for transmitting a segment connection control signal which produces an encoded control signal which is transmitted to a strip segment to which the vehicle is electrically connected via a sliding electrical power supply contact (16).

3. Electrical vehicle according to claim 2, **characterised in that** it comprises means (18) for transmitting an encoded electrical segment connection control signal via a sliding electrical power supply contact (16) of the vehicle.

4. Electrical vehicle according to claim 2, **characterised in that** it comprises means (18) for transmitting a segment connection control signal which produces an encoded hyperfrequency signal transmitted by an antenna carried by this vehicle to the segment with which a sliding electrical power supply contact (16) is in contact.

## Patentansprüche

1. Boden-Stromversorgungssystem für ein Elektrofahrzeug (2, 3, 17), das mit einem oder mehreren Stromabnehmern (16, 22) ausgerüstet ist, der oder die gemäß einer Längsachse, vorzugsweise Mittelachse des Fahrzeugs angeordnet ist bzw. sind, und das eine Folge von leitenden Segmenten (5A, 5B, SC), die voneinander elektrisch isoliert sind und die eine leitende Bahn für die Abnehmer bilden und derart angeordnet sind, dass sie einen Kanal (7) abdecken, der in einer Fahrbahn (1) für Fahrzeuge angeordnet ist, auf der die Segmente zutage treten, sowie individuelle Mittel (11) zur Kommutation statischen Typs für jedes Segment umfasst, wobei diese individuellen Mittel zur Kommutation einen Stromfluss des Segments, dem sie zugeordnet sind, mit einer Versorgungsrückleitung (13) sicherstellen, wenn ein Signal zur Steuerung der Verbindung des Segments mit einer Versorgungsleitung nicht von einem Fahrzeug für sie erhalten wurde, wobei die zu einem Segment gehörenden individuellen Mittel zur Kommutation in dem Kanal unter ihm, in dem die Versorgungsleitung (14) und die Versorgungsrückleitung (13), die den Segmenten gemeinsam sind, laufen, und wobei diese jedem Segment zugehörigen Kommutationsmittel (11) von individuellen Mitteln (12) zur Berücksichtigung eines Signals zur Steuerung der Verbindung gesteuert werden, die selektiv mit denen der Segmente, die in der eine leitende Bahn bildenden Folge von Segmente, unmittelbar benachbarten sind, verbunden sind oder in Ermangelung mit dem benachbarten Segment, das einzig in dem Fall eines Segments existiert, das an einem Ende der Bahn angeordnet ist, derart, dass ein Signal zur Steuerung der Verbindung, das von einem Fahrzeug kommend selektiv durch ein Segment empfangen wird, die Verbindung dieses Segments und derjenigen oder in Ermangelung desjenigen der Segmente, die bzw. das unmittelbar benachbart sind bzw. ist, mit der Versorgungsleitung herbeiführt,
**dadurch gekennzeichnet, dass** das Steuersignal codiert ist und dass jedes Segment mit individuellen Mitteln (12) ausgestattet ist, um das codierte Signal zur Steuerung einer Verbindung, das durch elektrische Leitung von einem Fahrzeug über einen Stromabnehmer (16) dieses Fahrzeugs, der dann in Kontakt mit dem Segment ist, übertragen wird, zu berücksichtigen.

2. Fahrendes elektrisches Fahrzeug, das ausgerüstet ist, um ein Versorgungssystem nach Anspruch 1 zu benutzen, **dadurch gekennzeichnet, dass** es Mittel (18) zur Übertragung eines Signals zur Steuerung einer Verbindung des Segments zu übertragen, wobei ein codiertes Steuersignal erzeugt wird, das zu dem Segment der Bahn übertragen wird, mit dem dieses Fahrzeug in elektrischer Verbindung über einen Stromabnehmer (16) ist.

3. Elektrisches Fahrzeug nach Anspruch 2, **dadurch gekennzeichnet, dass** es Mittel (18) zum Übertragen eines codierten elektrischen Steuersignals zur Segmentverbindung mittels eines Stromabnehmers (16) des Fahrzeugs umfasst.

4. Elektrisches Fahrzeug nach Anspruch 2, **dadurch gekennzeichnet, dass** es Mittel (18) zum Übertagen eines Steuersignals zur Segmentverbindung umfasst, das ein codiertes Höchstfrequenzsignal erzeugt, das von einer von diesem Fahrzeug getragenen Antenne an das Segment übertragen wird, mit dem ein Stromabnehmer (16) in Kontakt ist.
